# DEMANDE DE BREVET EUROPEEN

(11) **EP 4 583 358 A1**
(43) Date de publication de la demande: **09.07.2025**
(21) Numéro de dépôt: 24213510.1
(22) Date de dépôt: 18.11.2024
(51) Int. Cl.: H02J 7/00, H02J 7/34

(54) **PROCÉDÉ DE SURVEILLANCE D'UN NIVEAU D ´ÉNERGIE D'UNE SOURCE D ´ÉNERGIE ÉLECTRIQUE D'UNE INSTALLATION MOTRICE HYBRIDE POUR AÉRONEF**

(30) Priorité: 08.01.2024 FR 2400152
(71) Demandeur: Airbus Helicopters, 13725 Marignane Cedex (FR)
(72) Inventeur: DUMUR, Guillaume, 13300 SALON DE PROVENCE (FR); CAMUS, Jérémy, 13820 ENSUES LA REDONNE (FR); BOUDIER, Léonard, 13090 AIX-EN-PROVENCE (FR); LOGEAIS, Jean-François, 13009 MARSEILLE (FR); HENAFF, Mikaël, 13100 AIX EN PROVENCE (FR)
(74) Mandataire: GPI Brevets

(57) **Abrégé**

La présente invention concerne un procédé de surveillance d'un niveau d'énergie d'une source d'énergie électrique apte à délivrer une puissance électrique de référence *PRef* pendant une durée de référence *DTRef* pour un niveau de charge de référence NRef. Ladite source comporte au moins un dispositif de stockage d'énergie électrique et plusieurs capteurs. Ledit procédé comporte une acquisition de paramètres de ladite source (10) d'énergie électrique par l'intermédiaire desdits capteurs, puis un calcul d'une durée de consommation principale *DTprin* pendant laquelle ladite source est capable de fournir un courant électrique porteur de ladite puissance électrique de référence *PRef*, en fonction desdits paramètres de ladite source. Ensuite, un affichage principal de symboles principaux (31) indiquant ladite durée de consommation principale *DTprin* est réalisée afin d'indiquer à un opérateur pendant combien de temps la source peut fournir ladite puissance électrique de référence *PRef.*

## Description

La présente invention se situe dans le domaine technique des installations motrices hybrides pour aéronef, et est plus particulièrement relative à la gestion des sources d'énergie électrique de ces installations motrices hybrides.

L'invention concerne un procédé de surveillance d'un niveau d'énergie d'une source d'énergie électrique d'une installation motrice hybride ainsi qu'une source d'énergie électrique et un aéronef mettant en oeuvre ce procédé.

Un aéronef, et en particulier un giravion, peut comporter un ou plusieurs rotors susceptibles de générer une poussée et entraînés en rotation par une installation motrice hybride. Un giravion peut, par exemple, comporter un rotor de sustentation participant à la sustentation, voire au déplacement du giravion. Un giravion peut aussi comporter un rotor auxiliaire, par exemple un rotor arrière, pour notamment s'opposer au couple en lacet exercé par le rotor de sustentation sur le fuselage du giravion et contrôler les mouvements en lacet du giravion. Un giravion peut également comporter une ou plusieurs hélices.

L'installation motrice hybride d'un tel aéronef comporte un ou plusieurs moteurs thermiques ainsi qu'au moins une chaîne de transmission mécanique agencée entre, d'une part, le ou les rotors et, d'autre part, le ou les moteurs thermiques.

Une installation motrice hybride comporte de plus une ou plusieurs machines électriques pour entraîner le ou les rotors, par l'intermédiaire de ladite au moins une chaîne de transmission mécanique.

Une installation motrice hybride comporte également une source d'énergie électrique, munie d'un ou de plusieurs dispositifs de stockage, tels qu'une batterie ou une supercapacité par exemple. La source d'énergie électrique alimente en énergie électrique chaque machine électrique, par l'intermédiaire d'une chaîne de transmission électrique. Certaines sources d'énergie électrique peuvent comprendre des dispositifs de stockage d'énergie électrique rechargeables.

Il est à noter que l'expression « moteur thermique » désigne par commodité dans l'ensemble du texte tout moteur thermique pouvant être utilisé dans une telle installation motrice pour giravion, par exemple des turbomoteurs ou encore des moteurs à pistons. L'expression « moteur thermique » est à opposer aux expressions « moteur électrique » ou « machine électrique » qualifiant les moteurs mus par une énergie électrique.

Selon le fonctionnement de l'installation motrice hybride, les moteurs thermiques et les machines électriques peuvent être utilisés indépendamment ou bien en combinaison, simultanément ou séquentiellement.

Toutefois, l'utilisation d'une machine électrique pour l'entraînement d'un rotor est soumise à certaines contraintes, en particulier liées à la source d'énergie électrique. En effet, le niveau de charge de la source d'énergie électrique, correspondant à la quantité d'énergie électrique qu'elle comporte et susceptible d'être fournie à la machine électrique en vol, est limitée. Ce niveau de charge d'une source d'énergie électrique autorise donc la fourniture d'une puissance électrique pendant une durée limitée.

Une source d'énergie électrique avec un niveau d'énergie maximal est alors dimensionnée pour fournir une puissance de référence électrique prédéfinie pendant une durée nominale de consommation prédéfinie.

Toutefois, la machine électrique peut générer une puissance électrique différente de cette puissance électrique de référence, cette puissance électrique étant variable en fonction de la phase de vol et de la sollicitation de la machine électrique. Ainsi, dans le cas de l'utilisation d'une puissance électrique inférieure à la puissance électrique de référence, la durée de fourniture d'une telle puissance électrique est supérieure à la durée nominale de consommation.

En outre, des paramètres de la source d'énergie électrique, notamment sa température et son vieillissement, peuvent influer sur la valeur de ce niveau de charge et/ou sur le courant électrique que la source est capable de fournir. De plus, une source d'énergie électrique peut être rechargeable et peut à ce titre être rechargée, au moins partiellement, en vol, son niveau de charge augmentant alors.

En conséquence, il peut alors être difficile pour un pilote d'un aéronef de déterminer la durée pendant laquelle la source d'énergie électrique est capable de délivrer la puissance électrique requise par l'installation motrice hybride. La charge de travail du pilote augmente alors pour tenter d'estimer cette durée, ce qui peut être problématique dans une situation d'urgence.

Le document US 11509154 décrit un système permettant l'affichage d'informations relatives à aux sources d'énergie d'un aéronef électrique muni d'au moins un rotor de sustentation. Le système comprend une pluralité de capteurs mesurant des caractéristiques des sources d'énergie. Ces caractéristiques peuvent comprendre notamment l'état de charge, l'état de santé, l'énergie utile restante d'une source d'énergie, sa température, un couple moteur, une vitesse de rotation, voire une mesure de performance relative au fonctionnement de l'aéronef. Les informations affichées peuvent inclure le temps restant d'utilisation de l'aéronef, calculé à partir d'une ou de plusieurs caractéristiques. En particulier, ce temps peut être défini comme une période de temps pendant laquelle la source d'énergie est capable de fournir une puissance suffisante pour permettre un vol stationnaire de l'aéronef

Le document US 2023/0202321 décrit également un système et un procédé d'affichage d'informations relatives aux batteries d'un giravion électrique en fonction de mesures d'informations sur les batteries, telles que la tension électrique à ses bornes, son courant électrique de sortie, sa température et d'autres paramètres affectant son fonctionnement. L'affichage peut alors rendre compte de l'état de santé et/ou de fonctionnement des batteries ainsi que du temps de vol restant en fonction de la quantité d'électricité disponible dans les batteries. Le système peut détecter et prendre en compte la phase de vol et la manoeuvre en cours. L'affichage du temps de vol restant et/ou de l'énergie disponible dans les batteries peut tenir compte d'un profil de mission programmé ou du plan de vol.

Les documents US 2023/0058524, EP 3936376 et US 2022/0306307 font partie de l'arrière-plan technologique de l'invention.

La présente invention a alors pour but d'assister le pilote d'un aéronef comprenant une installation motrice hybride afin de diminuer sa charge de travail.

La présente invention concerne tout d'abord un procédé de surveillance d'un niveau d'énergie d'une source d'énergie électrique, cette source d'énergie électrique étant apte à délivrer une puissance électrique de référence *PRef* pendant une durée de référence *DTRef* prédéterminée pour un niveau de charge de référence NRef prédéterminé de la source d'énergie électrique, et comportant :
- au moins un dispositif de stockage d'énergie électrique,
- au moins un capteur, et
- un calculateur.

Le procédé selon l'invention est remarquable en ce qu'il comporte les étapes suivantes :
- acquisition d'au moins un paramètre de la source d'énergie électrique, par l'intermédiaire dudit au moins un capteur,
- calcul d'une durée de consommation principale *DTprin* pendant laquelle la source d'énergie électrique est capable de fournir un courant électrique porteur de la puissance électrique de référence *PRef,* en fonction dudit au moins un paramètre de la source d'énergie électrique, à l'aide du calculateur, et
- affichage principal de symboles principaux indiquant la durée de consommation principale *DTprin.*

De la sorte, le procédé selon l'invention permet de surveiller la source d'énergie électrique à l'aide d'un ou de plusieurs paramètres de cette source d'énergie électrique.

La source d'énergie électrique peut par exemple appartenir à une installation motrice hybride d'un aéronef.

La source d'énergie électrique peut comporter un unique dispositif de stockage d'énergie ou plusieurs dispositifs de stockage d'énergie, éventuellement rechargeables. Un tel dispositif de stockage d'énergie peut comporter une batterie par exemple.

La source d'énergie électrique comporte également un ou des capteurs destinés à surveiller le fonctionnement et l'état de la source d'énergie électrique en mesurant la valeur d'un ou de plusieurs paramètres. Les capteurs permettent de mesurer, d'une part, un ou des premiers paramètres relatifs directement à la source d'énergie électrique proprement dite et, d'autre part, un ou des seconds paramètres relatifs au courant électrique circulant dans la source d'énergie électrique.

La ou les premiers paramètres peuvent être choisis parmi un niveau de charge, une température, une résistance interne, une impédance, une capacité résiduelle et un vieillissement de la source d'énergie électrique, alors que la ou les seconds paramètres sont choisis parmi une intensité électrique et une tension électrique d'un courant électrique circulant dans la source d'énergie électrique.

Le niveau de charge prend, par exemple, la forme d'un coefficient exprimé en pourcentage égal à la quantité courante d'énergie électrique contenue dans la source d'énergie électrique divisée par la quantité maximale d'énergie électrique qu'elle peut contenir. Le vieillissement est un coefficient représentant l'efficacité et/ou le rendement de la source d'énergie électrique en fonction de sa durée d'utilisation. Le vieillissement est par exemple égal au chiffre 1 lorsque la source d'énergie électrique est neuve et diminue au cours de la vie de la source d'énergie électrique, conjointement à la durée et aux conditions d'utilisation, par exemple selon une loi prédéterminée. La capacité résiduelle de la source d'énergie électrique peut varier en fonction du profil de charge utilisé.

En outre, lorsque la source d'énergie électrique comporte au moins deux dispositifs de stockage d'énergie électrique, le ou les paramètres comportent un ou plusieurs des paramètres précédemment cités, et relatifs à chacun de ces dispositifs de stockage.

Le calculateur est relié aux capteurs par une liaison filaire ou non filaire et reçoit un ou plusieurs signaux porteurs d'informations relatives à ce ou ces paramètres de la source d'énergie électrique.

Le calculateur calcule alors la durée de consommation principale *DTprin* à l'aide de ce ou de ces paramètres. La durée de consommation principale *DTprin* peut par exemple être déterminée à l'aide d'une ou de plusieurs **lois** ou **d'abaques** stockés dans une mémoire du calculateur ou dans une mémoire reliée au calculateur. Ces lois ou d'abaques prennent par exemple en compte les paramètres de la source d'énergie électrique, notamment sa température et son vieillissement.

Les symboles principaux peuvent indiquer la durée de consommation principale *DTprin* en comprenant la valeur numérique de cette durée de consommation principale *DTprin.* De façon alternative ou complémentaire, les symboles principaux peuvent afficher cette durée de consommation principale *DTprin* en rapport avec la durée de référence *DTRef.* Les symboles principaux comportent alors par exemple un graphe à barres, un disque, une échelle, ou autres.

Les symboles principaux indiquant la durée de consommation principale *DTprin* peuvent être affichés sur un écran présent sur la source d'énergie électrique, ou sur un écran déporté, par exemple présent dans le cockpit d'un aéronef muni de la source d'énergie électrique surveillée.

Grâce à cet affichage principal des symboles principaux, un opérateur, voire le pilote d'un aéronef, visualise rapidement la durée de consommation principale *DTprin* disponible pour la source d'énergie électrique, selon le ou les paramètres de la source, et notamment son niveau de charge, et peut alors optimiser l'utilisation de l'énergie électrique fournie par la source d'énergie électrique.

De plus, les symboles principaux peuvent comporter une zone d'alerte correspondant à une durée de consommation finale *DTfin* prédéterminée pendant laquelle la source d'énergie électrique est capable de fournir un courant électrique porteur de la puissance électrique de référence *PRef,* avant que la source d'énergie électrique ne comporte plus d'énergie électrique, et ne soit alors pas capable de fournir d'énergie électrique.

La zone d'alerte est représentée par exemple avec une couleur spécifique, différente de la couleur utilisée pour les autres symboles principaux. Cette zone d'alerte permet ainsi d'indiquer clairement et distinctement les derniers pourcentages d'énergie électrique que peut fournir la source d'énergie électrique.

Le procédé selon l'invention peut aussi comporter une estimation d'au moins une durée de consommation complémentaire *DTcomp* pendant laquelle la source d'énergie électrique est capable de fournir un courant électrique porteur d'une puissance électrique complémentaire *Pcomp* différente de la puissance électrique de référence *PRef,* en fonction du ou des paramètres de la source d'énergie électrique et de la puissance électrique complémentaire *Pcomp,* et un affichage complémentaire de symboles complémentaires indiquant la durée de consommation complémentaire *DTcomp.*

En effet, la source d'énergie électrique n'est pas toujours utilisée pour délivrer la puissance électrique de référence *PRef.* Dès lors, lorsque la source d'énergie électrique est utilisée pour délivrer une puissance électrique différente et, par exemple inférieure à la puissance électrique de référence *PRef,* un opérateur sait que la source d'énergie électrique peut délivrer une telle puissance électrique pendant une durée supérieure à la durée de consommation principale *DTprin,* sans autre information.

De même, si la source d'énergie électrique délivre une puissance électrique supérieure à la puissance électrique de référence *PRef,* un opérateur visualise, grâce aux symboles complémentaires, que la source d'énergie électrique peut délivrer une telle puissance électrique pendant une durée inférieure à la durée de consommation principale *DTprin.*

L'affichage complémentaire des symboles complémentaires peut ainsi indiquer une ou plusieurs durées de consommation complémentaires *DTcomp* associées respectivement à une ou plusieurs puissances électriques complémentaires *Pcomp.* Cet affichage complémentaire permet avantageusement à l'opérateur d'avoir une idée plus précise de la durée pendant laquelle la source d'énergie électrique peut fournir une telle puissance électrique, même si cette puissance électrique n'est pas exactement égale à une des puissances électriques complémentaires *Pcomp* dont la durée de consommation complémentaire *DTcomp* est affichée. Cette puissance électrique complémentaire *Pcomp* peut par exemple correspondre à une utilisation particulière prédéterminée.

Le procédé selon l'invention peut également comporter un calcul d'une valeur de puissance électrique reçue ou délivrée par la source d'énergie électrique en fonction du ou des paramètres, et un affichage supplémentaire de la valeur de puissance électrique reçue ou délivrée.

Cette valeur de puissance électrique reçue ou délivrée peut être déterminée à l'aide des seconds paramètres du courant électrique circulant dans la source d'énergie électrique, à l'aide de la tension électrique et de l'intensité électrique de ce courant électrique. Cette valeur de puissance électrique reçue ou délivrée peut aussi être déterminée à l'aide de mesures au niveau de la machine électrique qui est alimentée par la source, par exemple à l'aide des mesures d'un couple moteur d'un arbre de sortie de la machine électrique et d'une vitesse de rotation de cet arbre de sortie.

De la sorte, l'opérateur peut instantanément savoir d'une part si la source reçoit un courant électrique, pour être rechargée, ou si elle fournit un courant électrique porteur d'une puissance électrique, et d'autre part la quantité d'énergie qu'elle reçoit ou délivre. L'opérateur a ainsi connaissance, par exemple, de la puissance électrique délivrée par rapport à la puissance électrique de référence *PRef* et l'opérateur peut estimer la durée de consommation de cette puissance électrique délivrée par rapport à la durée de consommation principale *DTprin* dont il a connaissance.

Pour faciliter sa prise de conscience du fonctionnement de la source d'énergie électrique, lorsque la source d'énergie électrique reçoit une puissance électrique, la valeur de la puissance électrique reçue est affichée avec une première couleur, et lorsque la source d'énergie électrique délivre une puissance électrique la valeur de la puissance électrique délivrée peut être affichée avec une seconde couleur distincte de la première couleur.

Par ailleurs, la source d'énergie électrique peut équiper un aéronef comportant une installation motrice hybride et un rotor de sustentation entraîné en rotation par l'installation motrice hybride via une chaîne de transmission mécanique, l'installation motrice hybride comportant au moins un moteur thermique, au moins une machine électrique, et la source d'énergie électrique reliée électriquement à la ou aux machines électriques, via une chaîne de liaison électrique.

Dans ce cas, le procédé peut comporter une détermination de flux d'énergie circulant dans la chaîne de transmission mécanique et la chaîne de liaison électrique, ainsi qu'un affichage de transfert, par exemple sur un écran présent dans le cockpit de l'aéronef, de symboles de transfert munis de figurines, représentant respectivement le rotor de sustentation, le ou les moteurs thermiques, la ou les machines électriques, et la source d'énergie électrique ainsi que de flèches représentant les flux d'énergie entre le rotor de sustentation et respectivement le ou les moteurs thermiques, et la ou les machines électriques, ainsi qu'entre la source d'énergie électrique et la ou les machines électriques.

De la sorte, le pilote de l'aéronef a une vision globale de l'échange des puissance mécaniques et des puissance électriques dans l'installation motrice hybride et vers le rotor de sustentation.

Par ailleurs, lorsque plusieurs paramètres de la source d'énergie électrique sont acquis lors de l'acquisition d'au moins un paramètre de la source d'énergie électrique, le procédé selon l'invention peut comporter une identification d'un paramètre le plus pénalisant parmi les paramètres. La durée de consommation principale *DTprin* est alors avantageusement calculée sur la base de ce paramètre le plus pénalisant et le plus critique parmi les paramètres acquis.

La durée de consommation principale *DTprin* affichée est ainsi minimisée, en limitant, voire évitant, les risques que la durée réelle de disponibilité de la puissance électrique de référence *PRef* soit inférieure à cette durée de consommation principale *DTprin,* en fonction de l'évolution à venir des paramètres. En plus des paramètres relatifs à la source d'énergie électrique, des paramètres environnementaux, tels que le taux d'humidité ou les vibrations subies par la source par exemple, peuvent aussi être pris en compte.

Le procédé selon l'invention intègre un mécanisme d'évaluation du paramètre le plus pénalisant pour la source d'énergie parmi les paramètres acquis. Ce mécanisme utilise des seuils relatifs respectivement à chacun des paramètres acquis. Ces seuils sont des valeurs limites, voire critiques, pour chaque paramètre et sont basés par exemple sur des normes de sécurité, des spécifications d'un fabricant, ou d'autres caractéristiques intrinsèques à la source et/ou fonctionnelles. A un même paramètre peuvent être associés un seuil dit « normal » et un seuil dit « critique », un dépassement du seuil critique pouvant provoquer éventuellement une dégradation de la source.

Les seuils peuvent être prédéterminés. Alternativement, ces seuils peuvent être déterminés en temps réel, par exemple en fonction de certains paramètres de la source et/ou de l'environnement, au cours d'une étape de détermination de seuils.

L'identification d'un paramètre le plus pénalisant parmi les paramètres peut alors comporter une comparaison des paramètres acquis avec ces seuils respectifs. Ensuite, une estimation du paramètre le plus pénalisant est effectuée, le paramètre le plus pénalisant étant par exemple le paramètre dépassant avec le plus grand écart en valeur ou en pourcentage le seuil qui lui correspond ou bien le paramètre ayant le plus faible écart en valeur ou en pourcentage avec ce seuil si aucun seuil n'est dépassé.

Cette durée de consommation principale *DTprin* déterminée en fonction du paramètre le plus pénalisant est ainsi minimisée en fonction de la valeur de chacun des paramètres acquis par rapport à des seuils respectifs correspondant à ces paramètres.

De façon alternative ou complémentaire, le procédé selon l'invention appliqué à une source d'énergie électrique d'un tel aéronef peut comporter une détermination d'au moins une caractéristique de l'aéronef, une estimation d'au moins un taux de descente et d'au moins une distance atteignable jusqu'au sol, en utilisant uniquement une énergie électrique que peut délivrer la source d'énergie électrique, et un affichage de descente, par exemple sur un écran présent dans le cockpit de l'aéronef, de symboles de descente représentant au moins une trajectoire de descente de l'aéronef en fonction du taux de descente de l'aéronef et de la distance atteignable par l'aéronef en vue d'un atterrissage. Les symboles de descente comportent au moins une trajectoire de descente de l'aéronef formée avec un taux de descente et une distance atteignable associée.

Le taux de descente de l'aéronef et la distance atteignable de l'aéronef sont déterminés en fonction notamment dudit au moins un paramètre de la source d'énergie électrique, de la puissance électrique fournie par la source d'énergie électrique à la machine électrique, de la ou des caractéristiques de l'aéronef, par exemple à l'aide de lois ou d'abaques stockées dans une mémoire du calculateur ou une mémoire reliée au calculateur.

De la sorte, le pilote a connaissance d'une ou de plusieurs trajectoires de descente permettant d'atteindre le sol, associées à une distance atteignable, avec le taux de descente associé, en vue d'un atterrissage notamment. Une telle connaissance est particulièrement utile dans le cas où le rotor de sustentation est entraîné uniquement par la ou les machines électriques alimentées par la source d'énergie électrique, par exemple en cas de panne du ou des moteurs thermiques.

De plus, lors de cette estimation, plusieurs taux de descente et plusieurs distances atteignables peuvent être estimés, en étant associés respectivement à plusieurs puissances électriques distinctes que peut délivrer la source d'énergie électrique. Les symboles de descente comportent alors plusieurs trajectoires de descente associées respectivement à ces taux de descente et ces distances atteignables. Les symboles de descente peuvent aussi comporter une valeur de la puissance électrique permettant d'obtenir le taux de descente et la distance atteignable associés à chaque trajectoire de descente affichées.

Un taux de descente de l'aéronef est par exemple déterminé à l'aide d'abaques ou de lois stockés dans une mémoire du calculateur ou dans une mémoire reliée au calculateur. Ces lois ou d'abaques, comprenant notamment des polaires caractérisant le vol et les performances de l'aéronef, prennent en compte une ou plusieurs caractéristiques de l'aéronef ainsi que la puissance électrique fournie par la source d'énergie électrique à la ou les machines électriques.

Une trajectoire de descente peut comporter uniquement une pente selon le taux de descente estimé si le niveau d'énergie de la source d'énergie électrique est suffisant pour que la source délivre la puissance électrique associée à ce taux de descente estimé jusqu'à ce que l'aéronef atteigne le sol. Alternativement, une trajectoire de descente peut comporter une première pente selon ce taux de descente estimé correspondant à un vol pendant la durée de consommation de l'énergie électrique de la source d'énergie électrique et une seconde pente à un taux de descente d'autorotation jusqu'au sol correspondant à un vol sans puissance motrice. Une réserve d'énergie électrique peut en outre être conservée spécifiquement pour être consommée lors de la phase d'atterrissage proprement dite, pour ralentir la descente de l'aéronef par exemple.

La ou les caractéristiques de l'aéronef peuvent être choisies parmi une hauteur de l'aéronef par rapport au sol, une masse de l'aéronef, une vitesse d'avancement de l'aéronef et une vitesse verticale de l'aéronef par exemple.

De plus, le taux de descente et la distance atteignable peuvent être corrigés en fonction d'une vitesse du vent subi par l'aéronef. En effet, en cas de vent fort de face, la distance atteignable sera réduite. La valeur de la vitesse du vent peut être connue et extraite d'un bulletin météorologique par le calculateur et/ou disponible au niveau d'un système avionique de l'aéronef.

Le procédé selon l'invention peut aussi comporter une détermination d'une distance atteignable maximale égale à la plus grande des distances atteignables précédemment estimées, la distance atteignable maximale étant associée à un taux de descente optimal et une puissance électrique optimale. La connaissance de cette distance atteignable maximale, permet ainsi à un pilote de l'aéronef d'estimer le point d'atterrissage atteignable le plus éloigné de sa position courante, indépendamment du relief qui l'entoure.

Le procédé selon l'invention peut alors comporter une sélection d'une trajectoire choisie parmi les trajectoires de descente affichées et les symboles de descente comportent un repère de descente représentatif du taux de pente correspondant à la trajectoire choisie sur un instrument d'horizon artificiel de l'aéronef.

De la sorte, le pilote de l'aéronef peut vérifier sur l'instrument d'horizon artificiel si le taux de descente réel de l'aéronef respecte et/ou est cohérent avec le taux de descente associé à la trajectoire choisie pour atteindre une aire d'atterrissage.

De façon alternative ou complémentaire, le procédé selon l'invention peut comporter une sélection d'une trajectoire choisie parmi les trajectoires de descente affichées et les symboles de descente comportent un repère de puissance représentatif de la puissance électrique correspondant à la trajectoire choisie sur un instrument d'indication de puissance de l'aéronef.

De la sorte, le pilote de l'aéronef peut vérifier sur l'instrument d'indication de puissance si la puissance consommée par l'aéronef respecte et/ou est en accord avec la puissance électrique associée à la trajectoire choisie pour atteindre une aire d'atterrissage. Un tel instrument d'indication de puissance est par exemple un indicateur de première limitation ou un indicateur de pas collectif.

Le procédé peut aussi comporter une localisation d'une position courante de l'aéronef, réalisée par exemple à l'aide d'un dispositif de localisation par satellites, et les symboles de descente comportent un affichage d'au moins une distance atteignable en superposition d'une carte de l'environnement de l'aéronef à partir de la position courante de l'aéronef, la carte étant par exemple stockée dans une mémoire de l'aéronef. La ou les distances atteignables affichées sont choisies parmi les distances atteignables estimées.

Le pilote de l'aéronef peut ainsi visualiser clairement, sur la carte, la distance que l'aéronef peut parcourir en cas de panne du ou des moteurs thermiques, en utilisant uniquement l'énergie électrique que peut fournir la source d'énergie électrique. Le pilote peut ainsi par exemple choisir une zone d'atterrissage pour un atterrissage d'urgence, en fonction de la distance atteignable par l'aéronef.

La présente invention a aussi pour objet une source d'énergie électrique, et comportant :
- au moins un dispositif de stockage d'énergie électrique,
- au moins un capteur, et
- un calculateur.

Cette source d'énergie électrique est apte à délivrer une puissance électrique de référence *PRef* pendant une durée de référence *DTRef* prédéterminée pour un niveau de charge de référence NRef prédéterminé et peut appliquer le procédé tel que précédemment décrit, le calculateur étant configuré pour mettre en oeuvre ce procédé.

La présente invention vise enfin un aéronef comportant une installation motrice hybride et un rotor de sustentation entraîné en rotation par l'installation motrice hybride via une chaîne de transmission mécanique, l'installation motrice hybride comportant au moins un moteur thermique, au moins une machine électrique, et une source d'énergie électrique reliée électriquement à la machine électrique, via une chaîne de liaison électrique. La source d'énergie électrique est apte à délivrer une puissance électrique de référence *PRef* pendant une durée de référence *DTRef* prédéterminée pour un niveau de charge de référence *NRef* prédéterminé et comporte au moins un dispositif de stockage d'énergie électrique, au moins un capteur et un calculateur.

La source d'énergie électrique peut appliquer le procédé tel que précédemment décrit, le calculateur étant par exemple configuré pour mettre en oeuvre ce procédé. Le calculateur peut être dédié à la réalisation de ce procédé ou bien partagé pour exécuter d'autres fonctions dans l'aéronef, voire être intégré à un système avionique de l'aéronef.

L'invention et ses avantages apparaîtront avec plus de détails dans le cadre de la description qui suit avec des exemples donnés à titre illustratif en référence aux figures annexées qui représentent :
- la figure 1, une vue d'un aéronef muni d'une source d'énergie électrique selon l'invention,
- la figure 2, une vue d'un aéronef muni d'une source d'énergie électrique selon l'invention,
- la figure 3, un schéma synoptique d'un procédé selon l'invention, et
- les figures 4 à 11, des vues d'exemples des affichages selon le procédé selon l'invention.

Les éléments présents dans plusieurs figures distinctes sont affectés d'une seule et même référence.

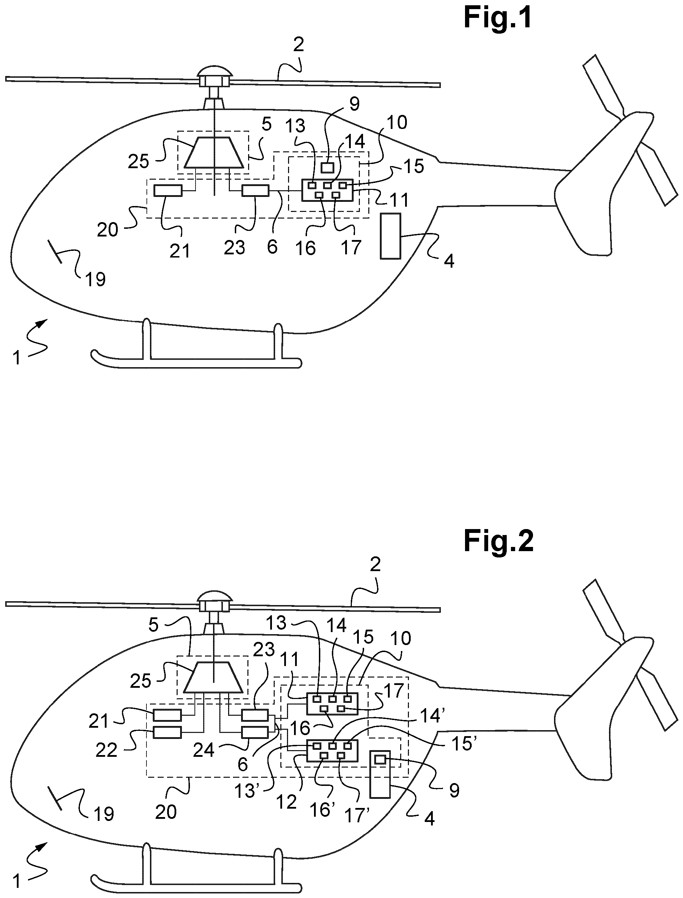

Les figures 1 et 2 représentent des exemples de sources 10 d'énergie électrique équipant une installation motrice hybride 20 d'un aéronef 1.

Quelle que soit la réalisation, la source 10 d'énergie électrique comporte au moins un dispositif de stockage 11,12 d'énergie électrique, au moins un capteur 13-17, et un calculateur 9.

Selon un premier exemple représenté sur la figure 1, la source 10 d'énergie électrique comporte un unique dispositif de stockage 11 d'énergie électrique. Selon un second exemple représenté sur la figure 2, la source 10 d'énergie électrique comporte deux dispositifs de stockage 11,12 d'énergie électrique agencés électriquement en parallèle l'un de l'autre.

Dans le cadre de l'invention, une source 10 d'énergie électrique peut également comporter plus de deux dispositifs de stockage 11,12 d'énergie électrique. Lorsqu'une source 10 comporte au moins deux dispositifs de stockage 11,12 d'énergie électrique, ceux-ci peuvent être agencés électriquement en parallèle entre eux et/ou en série.

Un dispositif de stockage 11,12 peut comporter, par exemple, une batterie électrique, éventuellement rechargeable, ou une supercapacité.

Indépendamment des exemples représentés, la source 10 d'énergie électrique est apte à délivrer un courant électrique porteur d'une puissance électrique de référence *PRef* pendant une durée de référence *DTRef* prédéterminée pour un niveau de charge de référence NRef prédéterminé. Le niveau de charge de la source 10 caractérise la quantité d'énergie électrique que la source 10 comporte. Ce courant électrique se caractérise par une intensité électrique et une tension électrique.

Bien entendu, la source 10 d'énergie électrique est également apte à délivrer une puissance électrique différente de la puissance électrique de référence *PRef.* Par exemple, la durée de référence *DTRef* peut être égale à deux minutes et le niveau de charge de référence NRef peut être égal à quatre-vingts pourcents (80%).

Les capteurs 13-17 de la source 10 d'énergie électrique mesurent un ou plusieurs paramètres de cette source 10 d'énergie électrique.

Les capteurs 13-17 peuvent notamment être agencés au niveau de la source 10 d'énergie électrique pour mesurer un ou des premiers paramètres relatifs directement à la source 10 d'énergie électrique proprement dite, ainsi qu'un ou des seconds paramètres relatifs au courant électrique circulant dans la source 10 d'énergie électrique.

Un tel capteur 13-17 peut fournir un signal brut porteur de mesures brutes réalisées par ce capteur 13-17. Un tel capteur 13-17 peut aussi comporter un calculateur intégré afin de traiter ces mesures brutes, par exemple via un filtrage ou un échantillonnage usuel, voire l'application de transformations, et fournir un signal traité porteur de ces mesures brutes ainsi traitées.

Par exemple, un dispositif de stockage 11,12 d'énergie électrique peut comporter un capteur de température 13,13', éventuellement muni d'un thermocouple, pour mesurer une température interne de ce dispositif de stockage 11,12 d'énergie électrique.

De manière complémentaire ou alternative, un dispositif de stockage 11,12 d'énergie électrique peut comporter un capteur de charge 14,14' permettant de mesurer un niveau de charge électrique de ce dispositif de stockage 11,12 d'énergie électrique, à savoir la quantité d'énergie électrique qu'elle comporte.

De manière complémentaire ou alternative, un dispositif de stockage 11,12 d'énergie électrique peut comporter un capteur de vieillissement 15,15' pour mesurer un niveau de vieillissement de ce dispositif de stockage 11,12 d'énergie électrique. Un tel capteur de vieillissement 15,15' peut par exemple comprendre un calculateur configuré pour effectuer un calcul du niveau de vieillissement du dispositif de stockage 11,12 d'énergie électrique en fonction de paramètres internes, tels que sa résistance interne et son état de charge par exemple. Le niveau de vieillissement peut être pris en compte pour déterminer la valeur de l'intensité électrique maximale d'un courant électrique que peut fournir ce dispositif de stockage 11,12 d'énergie électrique.

De manière complémentaire ou alternative, un dispositif de stockage 11,12 d'énergie électrique peut comporter un capteur d'intensité 16,16', éventuellement muni d'un ampèremètre, pour mesurer une intensité électrique d'un courant électrique circulant dans le dispositif de stockage 11,12 d'énergie électrique, à savoir en entrant ou en sortant de ce dispositif de stockage 11,12.

De manière complémentaire ou alternative, un dispositif de stockage 11,12 d'énergie électrique peut comporter un capteur de tension 17,17', éventuellement muni d'un voltmètre, pour mesurer une tension électrique aux bornes du dispositif de stockage 11,12 d'énergie électrique, et correspondant à la tension électrique du courant électrique entrant ou sortant du dispositif de stockage 11,12 d'énergie électrique.

Un dispositif de stockage 11,12 d'énergie électrique peut encore comporter d'autres capteurs, non représentés sur les figures, pour mesurer par exemple une résistance interne, une impédance et/ou une capacité résiduelle du dispositif de stockage 11,12 d'énergie électrique.

Le calculateur 9 peut être dédié uniquement au fonctionnement de la source 10. Alternativement, le calculateur 9 peut être partagé pour exécuter d'autres fonctions de l'aéronef 1, voire être intégré à un système avionique 4 de l'aéronef 1, comme représenté sur la figure 2. Dans les deux cas, le calculateur 9 est relié par voie filaire ou non filaire aux capteurs 13-17 de la source 10 d'énergie électrique pour recevoir les signaux émis par les capteurs 13-17.

Le calculateur 9 peut comprendre par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue.

La source 10 d'énergie électrique peut aussi comporter un afficheur 19, par exemple un écran, pour afficher plusieurs symboles comportant une ou des indications du niveau de charge de la source 10 d'énergie électrique. Cet afficheur 19 peut par exemple être déporté dans le cockpit de l'aéronef 1, lorsque la source 10 d'énergie électrique équipe une installation motrice hybride 20 de cet aéronef 1. Alternativement, l'afficheur 19 peut être intégré à la source 10 d'énergie électrique.

Dans tous les cas, l'afficheur 19 est relié par voie filaire ou non filaire au calculateur 9.

Des signaux, électriques ou optiques, analogiques ou numériques, peuvent alors être transmis, d'une part, par les capteurs 13-17 vers le calculateur 9 et, d'autre part, par le calculateur 9 vers l'afficheur 19.

Comme évoqué précédemment, la source 10 d'énergie électrique peut équiper une installation motrice hybride 20 d'un aéronef 1. L'installation motrice hybride 20 entraîne en rotation un ou plusieurs rotors 2, par exemple un rotor de sustentation un rotor arrière ou une hélice, via une chaîne de transmission mécanique 5. La chaîne de transmission mécanique 5 peut notamment comporter une boîte de transmission de puissance principale 25.

L'installation motrice hybride 20 peut comporter au moins un moteur thermique 21,22 relié mécaniquement à la chaîne de transmission mécanique 5, ainsi qu'au moins une machine électrique 23,24 reliée également mécaniquement à la chaîne de transmission mécanique 5.

La ou les machines électriques 23,24 sont reliées électriquement à la source 10 d'énergie électrique, via une chaîne de transmission électrique 6, de sorte à être alimentées par un courant électrique délivré par la source 10 d'énergie électrique.

Une telle machine électrique 23,24 peut fonctionner en mode moteur pour transformer une énergie électrique fournie par la source 10 d'énergie électrique, en énergie mécanique transmise au rotor de sustentation 2, via la chaîne de transmission mécanique 5. La machine électrique 23,24 peut également fonctionner en mode générateur pour transformer une énergie mécanique fournie par le ou les moteurs thermiques 21,22 et/ou le rotor de sustentation 2, via la chaîne de transmission mécanique 5, en énergie électrique transmise à la source 10 d'énergie électrique via une chaîne de transmission électrique 6, et destinée à recharger le ou les dispositifs de stockage 11,12 d'énergie électrique de la source 10.

De la sorte, le ou les moteurs thermiques 21,22 ainsi que la ou les machines électriques 23,24 peuvent entraîner conjointement ou indépendamment en rotation le rotor 2, via la chaîne de transmission mécanique 5. La source 10 d'énergie électrique peut notamment être utilisée pour pallier une panne du ou des moteurs thermiques 21,22 en alimentant la ou les machines électriques 23,24 afin d'entraîner en rotation le rotor 2.

Selon l'exemple représenté sur la figure 1, l'installation motrice hybride 20 comporte un moteur thermique 21 et une machine électrique 23. Selon l'exemple représenté sur la figure 2, l'installation motrice hybride 20 comporte deux moteurs thermiques 21,22 et deux machines électriques 23,24. Alternativement, une telle installation motrice hybride 20 peut comporter un ou plusieurs moteurs thermiques 21,22 et/ou une ou plusieurs machines électriques 23,24.

L'aéronef 1 comporte également un système avionique 4 centralisant diverses informations relatives au vol et au fonctionnement de l'aéronef 1, obtenues à l'aide de capteurs et/ou calculateurs usuels (non représentés). Le système avionique 4 peut ensuite afficher ces informations à l'attention d'un pilote de l'aéronef 1. Ces informations centralisées par le système avionique 4 comportent, par exemple, une hauteur par rapport au sol, une vitesse d'avancement et une vitesse verticale de l'aéronef 1 mesurées par des capteurs dédiés, respectivement par un capteur de hauteur, telle une radiosonde par exemple, un capteur de vitesse d'avancement tel qu'un anémomètre et un capteur de vitesse verticale tel qu'un variomètre.

Lorsque le calculateur 9 est dédié uniquement au fonctionnement de la source 10, le calculateur 9 est relié par voie filaire ou non filaire à ce système avionique 4. De telles informations relatives au vol et au fonctionnement de l'aéronef 1 peuvent ainsi être transmises au calculateur 9, à l'aide de signaux, électriques ou optiques, analogiques ou numériques.

De plus, des instructions ou un programme d'ordinateur peuvent être stockés dans une mémoire du calculateur 9 ou dans une mémoire reliée à ce calculateur 9. Le calculateur 9 peut alors exécuter ces instructions ou ce programme pour mettre en oeuvre un procédé de surveillance d'un niveau d'énergie de la source 10 d'énergie électrique.

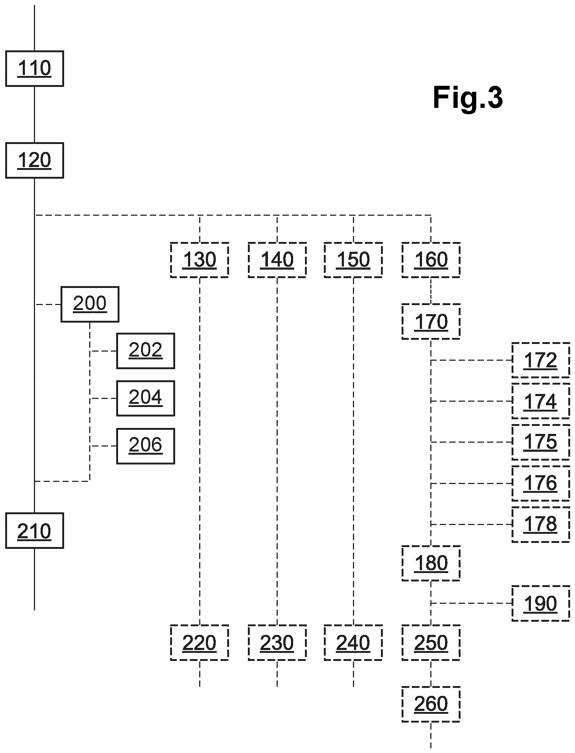

La figure 3 représente un schéma synoptique de ce procédé surveillance d'un niveau d'énergie d'une source 10 d'énergie électrique. Ce procédé peut comporter les étapes suivantes.

Tout d'abord, le procédé comporte une acquisition 110 d'au moins un paramètre de la source 10 d'énergie électrique, réalisée par l'intermédiaire des capteurs 13-17,13'-17'.

De la sorte, un ou plusieurs premiers paramètres relatifs à la source 10 d'énergie électrique, et en particulier relatifs au ou aux dispositifs de stockage 11,12 d'énergie électrique, et/ou un ou plusieurs seconds paramètres relatifs au courant électriques circulant dans la source 10 d'énergie électrique, et en particulier relatifs au courant électrique circulant dans le ou les dispositifs de stockage 11,12 d'énergie électrique, sont acquis. Des signaux porteurs de ces paramètres sont, par exemple, transmis par les capteurs 13-17,13'-17' au calculateur 9, et stockés éventuellement dans une mémoire du calculateur 9 ou reliée au calculateur 9.

Lors de cette acquisition 110, si la source 10 d'énergie électrique comporte au moins deux dispositifs de stockage 11,12 d'énergie électrique, une acquisition d'au moins un paramètre pour chacun de ces dispositifs de stockage 11,12 est effectuée.

Suite à cette acquisition 110, le procédé comporte un calcul 120, effectué par le calculateur 9 en fonction du ou des paramètres de la source 10 d'énergie électrique précédemment acquis, d'une durée de consommation principale *DTprin* pendant laquelle la source 10 d'énergie électrique est capable de fournir un courant électrique porteur de la puissance électrique de référence *PRef.* La durée de consommation principale *DTprin* est calculé à l'aide de ce ou ces paramètres, et d'une ou de plusieurs lois ou d'abaques stockés dans une mémoire du calculateur 9 ou dans une mémoire reliée au calculateur 9. La durée de consommation principale *DTprin* peut notamment être égale à la quantité d'énergie que comporte la source d'énergie électrique divisée par la puissance électrique de référence *PRef,* la quantité d'énergie étant définie par le niveau de charge de la source ainsi qu'éventuellement par sa température, voire son vieillissement.

Ensuite, le procédé comporte l'affichage principal 210, sur l'afficheur 19, de symboles principaux 31 indiquant la durée de consommation principale *DTprin.*

Les symboles principaux 31 peuvent indiquer la durée de consommation principale *DTprin* en affichant cette durée de consommation principale *DTprin* en rapport avec la durée de référence *DTRef.* La durée de référence *DTRef* a été préalablement stockée dans une mémoire du calculateur 9 ou dans une mémoire reliée au calculateur 9.

Les symboles principaux 31 peuvent comporter diverses formes, telles qu'un graphe à barres, un disque, une échelle, ou autres.

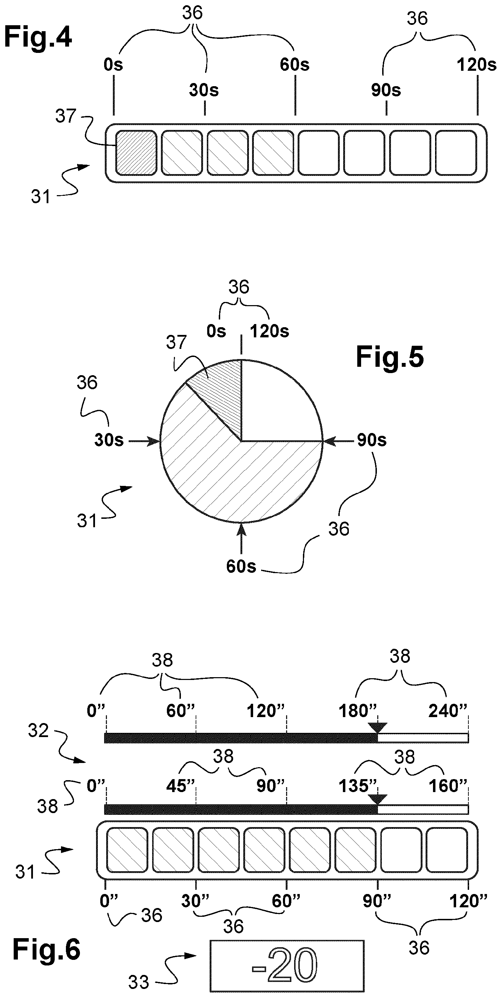

La figure 4 représente un premier exemple de symboles principaux 31 comportant un graphe à barres comportant huit barres représentant chacune une durée égale à un huitième de la durée de référence *DTRef.* La totalité des barres représentant ainsi la durée de référence *DTRef* correspondant à un niveau de charge de la source 10 égal ou supérieur au niveau de charge de référence NRef.

Ainsi, les carrés remplis illustrent conjointement la durée de consommation principale *DTprin* alors que le ou les carrés représentés vides correspondent à la quantité d'énergie électrique de la source 10 déjà consommée. Selon ce premier exemple, la source 10 d'énergie électrique dispose d'une durée de consommation principale *DTprin* égale à la moitié de la durée de référence *DTRef.*

La figure 5 représente un deuxième exemple des symboles principaux 31 comportant un disque. Un disque plein, à savoir rempli entièrement, représente la durée de référence DTRef correspondant à un niveau de charge de la source 10 égal ou supérieur au niveau de charge de référence NRef. Lorsque la durée de consommation principale *DTprin* est inférieure à la durée de référence *DTRef,* alors un secteur angulaire apparait par exemple vide, et correspond à la quantité d'énergie électrique de la source 10 déjà consommée. Selon ce premier exemple, la source 10 d'énergie électrique dispose d'une durée de consommation principale *DTprin* égale aux trois quarts de la durée de référence *DTRef.*

Indépendamment de ces formes, les symboles principaux 31 peuvent également comporter des index principaux 36 comportant des valeurs chiffrées correspondant à différentes valeurs de la durée de consommation principale *DTprin,* comme représenté sur les figures 4 et 5.

De plus, les symboles principaux 31 peuvent comporter une zone d'alerte 37 correspondant à une durée de consommation finale *DTfin* pendant laquelle la source 10 d'énergie électrique est capable de fournir un courant électrique porteur de la puissance électrique de référence *PRef,* avant que la source 10 d'énergie électrique ne soit plus capable de fournir d'énergie électrique. Une telle zone d'alerte 37 est représentée hachurée sur les figures 4 et 5, et correspond à un huitième de la durée de référence *DTRef* et est par exemple égale à 15 secondes. La durée de consommation finale *DTfin* est prédéterminée, et donc indépendante du ou des paramètres de la source 10. En pratique, une telle zone d'alerte 37 peut être représentée avec une couleur distinctive, par exemple orange ou rouge, et distincte de la couleur utilisée pour remplir les cases ou les secteurs angulaires de la représentation graphique de ce symbole principale 31.

Grâce à cet affichage principal 210 des symboles principaux 31, un opérateur ou un pilote de l'aéronef 1 visualise clairement et rapidement la durée de consommation principale *DTprin* pendant laquelle la source 10 peut fournir la puissance électrique de référence *PRef.* Il peut ainsi optimiser l'utilisation de l'énergie électrique que comporte la source 10 d'énergie électrique, en fonction notamment de la durée et de l'exigence du vol jusqu'à un atterrissage dans le cas d'un aéronef 1. Le pilote peut par exemple utiliser une partie de cette énergie électrique, tout en conservant une quantité d'énergie électrique pour pallier une éventuelle panne d'un ou des moteurs thermiques 21,22.

Cet affichage principal 210 prend avantageusement en compte les conditions réelles d'utilisation de la source 10 d'énergie électrique grâce aux paramètres acquis de la source 10, et notamment sa température, son niveau de charge et son niveau de vieillissement, ainsi que le courant électrique circulant dans la source 10, que celle-ci fournisse un courant électrique pour entraîner le rotor 2, ou reçoive un courant électrique pour recharger le ou les dispositifs de stockage 11,12 d'énergie électrique.

En outre, le procédé selon l'invention peut comporter une estimation 130 d'au moins une durée de consommation complémentaire *DTcomp* pendant laquelle la source 10 d'énergie électrique est capable de fournir un courant électrique porteur d'une puissance électrique complémentaire *Pcomp* différente de la puissance électrique de référence *PRef.* Cette estimation est effectuée par le calculateur 9, en fonction du ou des paramètres de la source 10 d'énergie électrique et de la puissance électrique complémentaire *Pcomp.* Le procédé selon l'invention peut aussi comporter un affichage complémentaire 220, sur l'afficheur 19, de symboles complémentaires 32 indiquant cette durée de consommation complémentaire *DTcomp* associée à cette puissance électrique complémentaire *Pcomp.* Le calculateur 9 peut par exemple effectuer une règle de trois entre la puissance électrique complémentaire *Pcomp,* la puissance électrique de référence *PRef* et la durée de consommation principale *DTprin* pour estimer la durée de consommation complémentaire *DTcomp.*

La source d'énergie électrique n'est pas toujours sollicitée pour délivrer la puissance électrique de référence *PRef.* Dès lors, il n'est pas toujours évident pour un opérateur, voire un pilote de l'aéronef 1, d'estimer la durée pendant laquelle la source 10 d'énergie électrique est capable de délivrer une puissance électrique différente de la puissance électrique de référence *PRef,* cette puissance électrique différente pouvant être supérieure ou inférieure à la puissance électrique de référence *PRef.* L'affichage complémentaire 220 de symboles complémentaires 32 permet avantageusement d'indiquer une ou plusieurs durées de consommation complémentaires *DTcomp* associées respectivement à une ou plusieurs puissances électriques complémentaires *Pcomp,* ce qui permet à l'opérateur de connaître exactement la durée d'utilisation d'une telle puissance électrique complémentaire *Pcomp* et d'avoir une idée plus précise de la durée d'utilisation d'une puissance électrique différente de la puissance électrique de référence *PRef* et d'une puissance électrique complémentaire *Pcomp,* cette puissance électrique pouvant être située entre une puissance électrique complémentaire *Pcomp* et la puissance électrique de référence *PRef* ou entre deux puissances électriques complémentaires *Pcomp.*

La figure 6 représente les symboles principaux 31, sous la forme d'un graphe à barres muni des index principaux 36, ainsi que l'affichage complémentaire 32 pour deux puissances électriques complémentaires *Pcomp* respectivement égales à 50% et 75% de la puissance électrique de référence *PRef.* L'affichage complémentaire 32 comporte également des index complémentaires 38 comportant des valeurs chiffrées correspondant à différentes valeurs de la durée de consommation complémentaire *DTcomp* associées respectivement à ces puissances électriques complémentaires *Pcomp.*

Par ailleurs, le procédé selon l'invention peut comporter un calcul 140 d'une valeur de puissance électrique reçue ou délivrée par la source 10 d'énergie électrique réalisée par le calculateur 9 en fonction du au moins un paramètre de la source 10 d'énergie électrique, ainsi qu'un affichage supplémentaire 230, sur l'afficheur 19, de cette valeur 33 de puissance électrique reçue ou délivrée.

L'opérateur ou le pilote de l'aéronef 1 peut ainsi facilement voir, d'une part, si la source 10 d'énergie électrique délivre une puissance électrique pour entraîner par exemple le rotor de sustentation 2 ou reçoit une puissance électrique transmise par la ou les machines électriques 23,24, et, d'autre part, la valeur de cette puissance électrique délivrée ou reçue.

De plus, pour faciliter la compréhension de l'opérateur ou du pilote du mode de fonctionnement de la source 10 d'énergie électrique, des couleurs distinctes peuvent être utilisées pour l'affichage supplémentaire 230 de cette valeur de puissance électrique reçue ou délivrée selon que la source 10 d'énergie électrique reçoit ou délivre cette puissance électrique. Un signe « - » et éventuellement un signe « + » peuvent également être affichés devant la valeur de la puissance électrique reçue ou délivrée, selon que la source 10 d'énergie électrique reçoit ou délivre cette puissance électrique.

Les symboles principaux 31 représentés sur la figure 6 comporte également l'affichage supplémentaire 230 d'une valeur de puissance électrique avec un signe « - » correspondant à la puissance électrique reçue par la source 10 d'énergie électrique.

Dans le cas spécifique où la source 10 d'énergie électrique équipe un aéronef 1, le procédé peut comporter une détermination 150, par le calculateur 9, des flux d'énergie circulant dans la chaîne de transmission mécanique 5 et la chaîne de liaison électrique 6. La détermination 150 vise essentiellement à déterminer le sens de circulation des flux d'énergie dans la chaîne de transmission mécanique 5 et la chaîne de liaison électrique 6, à savoir entre d'une part le rotor de sustentation 2 et d'autre part le ou les moteurs thermiques 21,22, la ou les machines électriques 23,24 ainsi qu'entre la ou les machines électriques 23,24 et la source 10 d'énergie électrique. Le flux d'énergie dans la chaîne de transmission mécanique 5 est unidirectionnel du ou des moteurs thermiques 21,22 vers le rotor 2 alors qu'il peut être bidirectionnel entre la ou les machines électriques 23,24 et le rotor 2. Le flux d'énergie dans la chaîne de liaison électrique 6 est quant à lui bidirectionnel.

Les sens des flux d'énergie dans la chaîne de transmission mécanique 5 peuvent être définis par exemple à l'aide de mesures de couple moteur sur le ou les moteurs thermiques 21,22 et sur la ou les machines électriques 23,24 à l'aide de couplemètres. Le sens des flux d'énergie dans la chaîne de liaison électrique 6 peut être défini à l'aide d'un ou de plusieurs seconds paramètres relatifs au courant électrique circulant dans la source 10 d'énergie électrique.

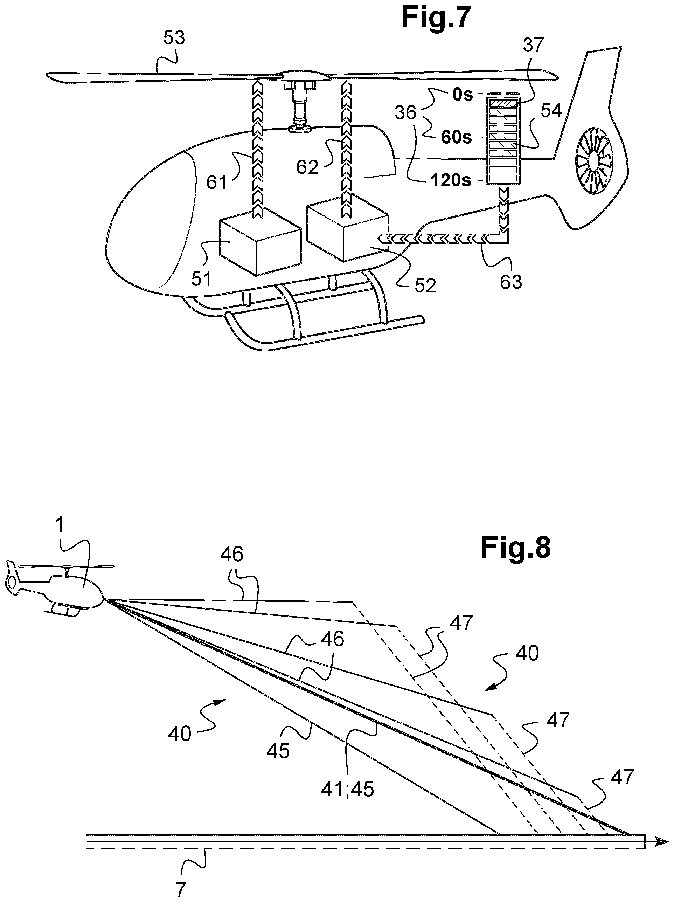

Le procédé comporte alors un affichage de transfert 240, sur l'afficheur 19, de symboles de transfert 34 munis de figurines 51-54 représentant respectivement le rotor de sustentation 2, le ou les moteurs thermiques 21,22, la ou les machines électriques 23,24 et la source 10 d'énergie électrique ainsi que de flèches 61-63 représentant les sens de circulation de ces flux d'énergie comme représenté sur la figure 7.

La figure 7 représente le cas de l'aéronef 1 de la figure 1, lors d'un fonctionnement au cours duquel le moteur 21, représenté par une première figurine 51, et la machine électrique 23, représentée par une deuxième figurine 52, entraînent conjointement en rotation le rotor de sustentation 2, représenté par une troisième figurine 53, la source 10 d'énergie électrique, représentée par une quatrième figurine 54, alimentant électriquement la machine électrique 23. Les symboles principaux 31 peuvent être affichés simultanément à ces symboles de transfert 34 pour indiquer notamment la durée de consommation principale *DTprin.*

Grâce à ces symboles de transfert 34, le pilote de l'aéronef 1 visualise facilement et instantanément les échanges énergétiques au sein des chaînes de transmission mécanique 5 et électrique 6, ainsi que le mode de fonctionnement de la source 10 d'énergie électrique, en tant que fournisseur ou récepteur d'énergie.

Dans le cas spécifique où la source 10 d'énergie électrique équipe l'aéronef 1, le procédé peut comporter une détermination 160 de caractéristiques de l'aéronef 1, à l'aide du système avionique 4 et/ou de capteurs usuels de l'aéronef 1 aptes à déterminer ces caractéristiques tels que la hauteur de l'aéronef 1 par rapport au sol, sa vitesse d'avancement et sa vitesse verticale par exemple.

Ensuite, le calculateur 9 peut réaliser une estimation 170 d'au moins un taux de descente, puis d'au moins une distance atteignable par l'aéronef 1 lorsque l'aéronef 1 utilise uniquement l'énergie électrique délivrée par la source 10 d'énergie électrique. Cette estimation 170 est par exemple réalisée à partir de lois ou abaques dédiés stockés dans une mémoire du calculateur 9 ou dans une mémoire reliée au calculateur 9. Dans ce but, le calculateur 9 reçoit des signaux porteurs d'informations relatives à la ou aux caractéristiques de l'aéronef 1 précédemment mesurées, ainsi que d'informations relatives au ou aux paramètres de la source 10 d'énergie électrique et peut estimer un ou plusieurs taux de descente de l'aéronef en fonction de cette ou ces caractéristiques de l'aéronef 1, du ou des paramètres de la source 10 d'énergie électrique et d'une ou plusieurs puissances électriques que peut fournir la source 10 d'énergie électrique à la machine électrique 23,24.

Ce ou ces taux de descente peuvent être déterminés à l'aide d'abaques ou de lois stockés dans une mémoire du calculateur 9 ou dans une mémoire reliée au calculateur 9. Ces lois ou abaques peuvent par exemple comporter des courbes polaires caractérisant le vol et les performances de l'aéronef 9.

Le calculateur 9 applique les caractéristiques de l'aéronef 1 et une puissance électrique fournie par la source 10 d'énergie électrique à la ou les machines électriques 23,24 à ces lois ou abaques pour en déduire le taux de descente associé à cette puissance électrique. Une vitesse de descente de l'aéronef 1 utilisant cette puissance électrique et appliquant ce taux de descente peut être déterminée simultanément par le calculateur 9 à l'aide de ces lois et abaques en fonction des caractéristiques de l'aéronef 1 et de la puissance électrique fournie par la source 10 d'énergie électrique. Cette opération peut être renouvelée à plusieurs reprises avec différentes puissances électriques.

Ensuite, une ou plusieurs distances atteignables jusqu'au sol par l'aéronef 1 sont calculées par le calculateur 9 en fonction du ou des taux de descente estimés, du ou des paramètres de la source 10 d'énergie électrique et de la ou des caractéristiques de l'aéronef 1, notamment de la hauteur de l'aéronef 1 par rapport au sol. La durée de consommation associée à la puissance électrique utilisée pour déterminer le taux de descente, et la vitesse de descente correspondant à cette puissance électrique et à ce taux de descente sont également prises en compte ainsi qu'éventuellement un taux de descente en autorotation de l'aéronef 1.

En effet, une trajectoire de descente 40 peut être construite par le calculateur 9 jusqu'au sol pour déterminer la distance atteignable.

La distance atteignable est alors égale à la distance horizontale entre le point de départ de cette trajectoire de descente, à savoir la position courante de l'aéronef 1, et le point d'arrivée de cette trajectoire de descente au sol.

Cette trajectoire de descente 40 peut comporter uniquement une pente 45 selon le taux de descente estimé si la durée de consommation associée à la puissance électrique utilisée pour déterminer le taux de descente permet à l'aéronef 1 d'atteindre directement le sol à la vitesse de descente associée.

Dans le cas contraire, la trajectoire de descente 40 comporte une première pente 46 selon ce taux de descente estimé correspondant à un vol pendant cette durée de consommation et à la vitesse de descente, ainsi qu'une seconde pente 47 à un taux de descente d'autorotation jusqu'au sol correspondant à un vol sans puissance motrice. Le taux de descente en autorotation peut être prédéterminé, avant le vol, et éventuellement ajusté en fonction de la masse courante de l'aéronef 1, à l'aide des lois ou des abaques.

En outre, une réserve d'énergie électrique peut être conservée spécifiquement pour être consommée lors de la phase d'atterrissage proprement dite, pour ralentir la descente de l'aéronef 1 par exemple au moment du contact avec le sol.

L'estimation 170 peut comporter une ou plusieurs sous-étapes, telles une sous-étape de construction 172 de cette trajectoire de descente 40 et/ou une sous-étape de détermination 174 de la vitesse de descente associée au taux de descente estimé et à la puissance électrique correspondante. Une sous-étape de calcul 175 de la durée de consommation associée à la puissance électrique correspondant au taux de descente estimé peut aussi être effectuée. Cette sous-étape de calcul 175 est réalisée de façon identique à l'estimation 130 d'au moins une durée de consommation complémentaire *DTcomp* en considérant la puissance électrique complémentaire *Pcomp* égale à la puissance électrique correspondant au taux de descente estimé.

Une sous-étape de calcul 176 du taux de descente en autorotation peut également être réalisée par le calculateur 9, en fonction d'une masse courante de l'aéronef 1, fournie par exemple par le système avionique 4 et d'un taux de descente en autorotation prédéterminé, stocké dans une mémoire du calculateur 9 ou dans une mémoire reliée au calculateur 9.

Le calculateur 9 peut ainsi estimer lors de cette estimation 170 un seul taux de descente relatif une puissance électrique, par exemple à la puissance électrique de référence *PRef,* et la distance atteignable correspondante à ce taux de descente. Alternativement, le calculateur 9 peut estimer lors de cette estimation 170 plusieurs taux de descente distincts relatifs respectivement à plusieurs puissances électriques distinctes, par exemple égales à la puissance électrique de référence *PRef* et à une ou plusieurs puissances électriques complémentaires *Pcomp,* puis les distances atteignables correspondant à chacun de ces taux de descente.

Enfin, un affichage de descente 250, sur l'afficheur 19, de symboles de descente 35 affichant au moins une trajectoire de descente 40 de l'aéronef 1 vers le sol 7 est réalisé, comme représenté sur la figure 8.

Les symboles de descente 35 peuvent alors permettre d'afficher une ou plusieurs trajectoires 40 de l'aéronef 1 construites respectivement avec un couple comportant un taux de descente et la distance atteignable associée.

Le procédé peut aussi comporter une détermination 178 d'une distance atteignable maximale. Cette distance atteignable maximale est égale à la plus grande distance atteignable parmi les distances atteignables estimées et est associée à un taux de descente optimal et une puissance électrique optimale. Les symboles de descente 35 peuvent alors permettre d'afficher uniquement une seule trajectoire de descente dite « optimale » 41 de l'aéronef 1 construite avec un couple comportant le taux de descente optimal et la distance atteignable maximale. Alternativement, les symboles de descente 35 peuvent permettre d'afficher plusieurs trajectoires de descente 40 de l'aéronef 1 construites respectivement avec un couple comportant un taux de descente et la distance atteignable associée, dont la trajectoire optimale 41 de l'aéronef 1. La figure 8 représente un tel exemple d'affichage de descente 250.

Pour chaque trajectoire 40 de l'aéronef 1 affichée, la ou les valeurs de la puissance électrique, le taux de descente et/ou la distance atteignable associés, voire la durée de consommation associée, peuvent être également affichés. De plus, le taux de descente et la distance atteignable peuvent être corrigés par le calculateur 9 en fonction d'une vitesse du vent subi par l'aéronef 1, à l'aide des lois ou d'abaques stockés dans une mémoire de l'aéronef 1 en prenant en compte cette vitesse du vent. Cette vitesse du vent est par exemple fournie par le système avionique 4.

Grâce à l'affichage de descente 250, le pilote peut visualiser, sur les symboles de descente 35, la ou les trajectoires de descente 40 de l'aéronef 1 permises jusqu'au sol 7 par l'énergie électrique disponible dans la source 10 d'énergie électrique. Ainsi, en cas de panne du ou des moteurs thermiques 21,22, le pilote de l'aéronef 1 peut adapter la puissance électrique fournie par la source 10 d'énergie électrique pour atteindre une zone d'atterrissage.

De la sorte, le procédé selon l'invention permet avantageusement d'augmenter la sûreté de vol de l'aéronef 1, suite à une panne du ou des moteurs thermiques 21,22. La détermination 160 d'au moins une caractéristique de l'aéronef 1 et l'estimation 170 d'au moins un taux de descente et d'au moins une distance atteignable, ainsi que les étapes qui en découlent, peuvent être réalisées en parallèle notamment du calcul 120 de la durée de consommation principale *DTprin* et de l'affichage de descente 250. L'estimation 170 peut alternativement être effectuée indépendamment de ces étapes 120,250, et donc réalisée suite à l'acquisition 110 d'au moins un paramètre de la source 10.

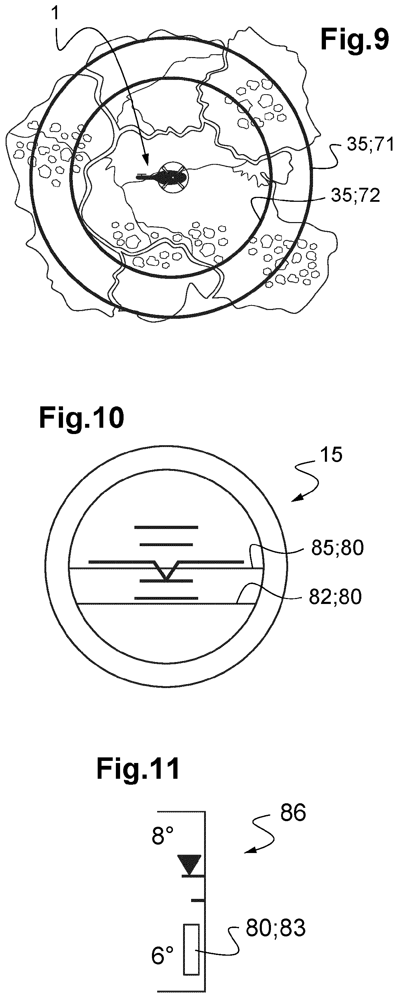

En outre, pour aider le pilote à choisir une zone d'atterrissage atteignable suite à une telle panne, le procédé peut aussi comporter une localisation 180 d'une position courante de l'aéronef 1, réalisée par exemple à l'aide d'un dispositif de localisation par satellites embarqué dans l'aéronef 1, et les symboles de descente 35 comporte un affichage d'une ou de plusieurs distances atteignables, voire uniquement la distance atteignable maximale, en superposition d'une carte de l'environnement de l'aéronef 1 à partir de la position courante de l'aéronef 1. La carte de l'environnement survolé par l'aéronef 1 a par exemple été préalablement stockée dans une mémoire de l'aéronef 1. Selon l'exemple de la figure 9, deux distances atteignables sont représentées sous la forme de cercles 71,72 centrés sur la position courante de l'aéronef 1. Un premier cercle 71 correspond à la distance atteignable maximale alors qu'un second cercle 72 correspond à une distance atteignable associée à la puissance électrique de référence *PRef.* Cette distance atteignable associée à la puissance électrique de référence *PRef* peut permettre d'éviter un obstacle, tel qu'une montagne, en autorisant dans un premier temps un vol sensiblement horizontal à l'aide de la puissance électrique de référence *PRef,* puis d'effectuer ensuite une descente vers le sol 7.

Le procédé selon l'invention peut aussi comporter un affichage d'assistance 260 sur l'afficheur 19, de symboles d'assistance 80 pour aider le pilote de l'aéronef 1 à suivre une trajectoire de descente 40.

Le procédé peut par exemple comporter une sélection 190 d'une trajectoire choisie parmi les trajectoires de descente 40 et les symboles d'assistance 80 peuvent comporter un horizon artificiel 85 et un repère de descente 82 représentatif du taux de pente correspondant à la trajectoire choisie, comme représenté sur la figure 10. Le repère de descente 82 peut être affiché sur un instrument d'horizon artificiel de l'aéronef 1.

Alternativement ou de façon complémentaire, le procédé peut comporter la sélection 190 d'une trajectoire choisie parmi les trajectoires de descente 40 et les symboles d'assistance 80 peuvent comporter un indicateur de puissance 86 de l'aéronef 1 et un repère de puissance 83 représentatif de la puissance électrique associée à la trajectoire choisie, comme représenté sur la figure 11. Le repère de puissance 86 peut être affiché sur un instrument d'indication de puissance de l'aéronef 1.

La sélection 190 d'une trajectoire choisie parmi les trajectoires de descente 40 peut par exemple être effectuée automatiquement par le calculateur 9, la trajectoire choisie étant par exemple la trajectoire optimale. Alternativement, la sélection 190 d'une trajectoire choisie parmi les trajectoires de descente 40 peut être effectuée manuellement par le pilote à l'aide d'un dispositif de sélection tel qu'un écran à dalle tactile par exemple.

Enfin, le procédé selon l'invention peut comporter lorsque, lors de l'acquisition 110, plusieurs paramètres de la source 10 sont acquis, une identification 200 d'un paramètre le plus pénalisant parmi les paramètres acquis, la durée de consommation principale *DTprin* étant alors calculée pour ce paramètre le plus pénalisant lors du calcul 120.

Cette étape d'identification 200 d'un paramètre le plus pénalisant parmi les paramètres acquis peut comporter des sous-étapes.

Une comparaison 204 des paramètres acquis peut notamment être effectuée avec des seuils respectifs attachés à ces paramètres. Des seuils spécifiques et distincts sont ainsi associés respectivement aux paramètres de la source 10.

Les seuils peuvent être prédéterminés et stockés dans une mémoire de l'aéronef 1, ou alternativement déterminés lors de la réalisation du procédé selon l'invention. Dans ce cas, l'étape d'identification 200 peut aussi comporter une définition 202 de seuils relatifs respectivement aux différents paramètres acquis lors de la acquisition 110.

Un unique seuil peut être associé à un paramètre. Alternativement, à chaque paramètre peuvent être attachés un seuil « normal » caractérisant une limite fonctionnelle de la source 10 vis-à-vis de ce paramètre et un seuil « critique » caractérisant une limite de dégradation de la source 10.

Suite à cette comparaison 204, une estimation 206 du paramètre le plus pénalisant est réalisée à l'aide du calculateur 9. Le paramètre le plus pénalisant est alors le paramètre dépassant le plus du seuil lui correspondant, à savoir par exemple le paramètre supérieur au seuil correspondant et avec le plus grand écart avec ce seuil en valeur ou en pourcentage. Si aucun seuil n'est dépassé par le paramètre correspondant, le paramètre le plus pénalisant est alors le paramètre ayant le plus faible écart en valeur ou en pourcentage avec le seuil correspondant.

La durée de consommation principale *DTprin* est alors avantageusement déterminée, lors du calcul 120, pour le paramètre le plus pénalisant identifié. L'affichage principal 210 indique alors à un opérateur cette durée de consommation principale *DTprin* minimisée, la durée la plus faible de disponibilité de la puissance électrique de référence *PRef* prenant en compte le paramètre le plus critique.

Par ailleurs, le procédé peut comporter une alerte informant un opérateur de la présence d'un paramètre pénalisant, par exemple dépassant un seuil.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de surveillance d'un niveau d'énergie d'une source (10) d'énergie électrique, ladite source (10) d'énergie électrique étant apte à délivrer une puissance électrique de référence *(PRef)* pendant une durée de référence (*DTRef*) prédéterminée pour un niveau de charge de référence (NRef) prédéterminé et comportant :
- au moins un dispositif de stockage (11,12) d'énergie électrique,
- au moins un capteur (13-17), et
- un calculateur (9),
**caractérisé en ce que** ledit procédé comporte les étapes suivantes :
- acquisition (110) d'au moins un paramètre de ladite source (10) d'énergie électrique par l'intermédiaire dudit au moins un capteur (13-17),
- calcul (120) d'une durée de consommation principale (*DTprin*) pendant laquelle ladite source (10) d'énergie électrique est capable de fournir un courant électrique porteur de ladite puissance électrique de référence *(PRef),* en fonction dudit au moins un paramètre de ladite source (10) d'énergie électrique, et
- affichage principal (210) de symboles principaux (31) indiquant ladite durée de consommation principale (*DTprin*).

2. Procédé selon la revendication 1,
dans lequel ledit au moins un paramètre est choisi parmi un niveau de charge, une température, et un vieillissement de ladite source (10) d'énergie électrique, ainsi qu'une intensité électrique et une tension électrique d'un courant électrique circulant dans ladite source (10) d'énergie électrique, une résistance interne de ladite source (10) d'énergie électrique, une impédance de ladite source (10) d'énergie électrique, et une capacité résiduelle de ladite source (10) d'énergie électrique.

3. Procédé selon la revendication 2,
dans lequel lorsque ladite source (10) d'énergie électrique comporte au moins deux dispositifs de stockage (11,12) d'énergie électrique, ledit au moins un paramètre comporte un ou plusieurs paramètres relatifs à chacun desdits dispositifs de stockage (11,12).

4. Procédé selon l'une quelconque des revendications 1 à 3,
dans lequel ledit procédé comporte une estimation (130) d'au moins une durée de consommation complémentaire (*DTcomp*) pendant laquelle ladite source (10) d'énergie électrique est capable de fournir un courant électrique porteur d'une puissance électrique complémentaire (*Pcomp*) différente de ladite puissance électrique de référence *(PRef),* en fonction dudit au moins un paramètre de ladite source (10) d'énergie électrique et de ladite puissance électrique complémentaire (*Pcomp*), et un affichage complémentaire (220) de symboles complémentaires (32) indiquant ladite durée de consommation complémentaire (*DTcomp*).

5. Procédé selon l'une quelconque des revendications 1 à 4,
dans lequel lors de ladite acquisition (110), plusieurs paramètres de ladite source (10) d'énergie électrique sont acquis, et ledit procédé comporte une identification (200) d'un paramètre le plus pénalisant parmi lesdits paramètres acquis, ladite durée de consommation principale (*DTprin*) étant calculée pour ledit paramètre le plus pénalisant lors dudit calcul (120).

6. Procédé selon la revendication 5,
dans lequel ladite identification (200) d'un paramètre le plus pénalisant parmi lesdits paramètres acquis comporte les sous-étapes suivantes :
- comparaison (204) desdits paramètres acquis avec des seuils respectifs, et
- estimation (206) dudit paramètre le plus pénalisant comme étant ledit paramètre dépassant avec le plus grand écart en valeur ou en pourcentage ledit seuil lui correspondant ou le paramètre ayant le plus faible écart en valeur ou en pourcentage avec ledit seuil si aucun desdits seuils n'est dépassé.

7. Procédé selon l'une quelconque des revendications 1 à 6,
dans lequel ladite source (10) d'énergie électrique équipe un aéronef (1) comportant une installation motrice hybride (20) et un rotor de sustentation (2) entraîné en rotation par ladite installation motrice hybride (20) via une chaîne de transmission mécanique (5), ladite installation motrice hybride (20) comportant au moins un moteur thermique (21,22), au moins une machine électrique (23,24) et ladite source (10) d'énergie électrique reliée électriquement à ladite machine électrique (23,24) via une chaîne de liaison électrique (6), ledit procédé comportant une détermination (160) d'au moins une caractéristique dudit aéronef (1), une estimation (170) d'au moins un taux de descente et d'au moins une distance atteignable en utilisant uniquement une énergie électrique que peut délivrer ladite source (10) d'énergie électrique en fonction dudit au moins un paramètre de ladite source (10) d'énergie électrique et de ladite au moins une caractéristique dudit aéronef (1), et un affichage de descente (250) de symboles de descente (35) représentant au moins une trajectoire de descente (40) dudit aéronef (1) en fonction dudit taux de descente et de ladite distance atteignable.

8. Procédé selon la revendication 7,
dans lequel lors de ladite estimation (170), plusieurs taux de descente et plusieurs distances atteignables sont estimés, en étant associés respectivement à plusieurs puissances électriques distinctes que peut délivrer ladite source (10) d'énergie électrique, et plusieurs trajectoires de descente (40) sont affichées.

9. Procédé selon la revendication 8,
dans lequel ledit procédé comporte une détermination (178) d'une distance atteignable maximale égale à la plus grande distance desdites distances atteignables, ladite distance atteignable maximale étant associée à un taux de descente optimal et une puissance électrique optimale.

10. Procédé selon l'une quelconque des revendications 8 à 9,
dans lequel ledit procédé comporte une localisation (180) d'une position courante dudit aéronef (1) et lesdits symboles de descente (35) comportent au moins une distance atteignable affichée en superposition d'une carte de l'environnement dudit aéronef (1) à partir de ladite position courante dudit aéronef (1), ladite au moins une distance atteignable affichée étant choisie parmi ladite d'au moins une distance atteignable estimée.

11. Procédé selon les revendications 9 et 10,
dans lequel ladite au moins une distance atteignable affichée comporte ladite distance atteignable maximale et une distance atteignable de référence associée à ladite puissance électrique de référence *(PRef).*

12. Procédé selon l'une quelconque des revendications 8 à 11,
dans lequel ledit procédé comporte une sélection d'une trajectoire (190) choisie parmi lesdites trajectoires de descente (40) et un affichage d'assistance (260) de symboles de descente (35) comportant un horizon artificiel (85) et un repère de descente 82 représentatif dudit taux de pente correspondant à ladite trajectoire choisie.

13. Procédé selon l'une quelconque des revendications 8 à 12,
dans lequel ledit procédé comporte une sélection (190) d'une trajectoire choisie parmi lesdites trajectoires de descente (40) et un affichage d'assistance (260) de symboles de descente (35) comportant un indicateur de puissance (86) dudit aéronef (1) et un repère de puissance représentatif de ladite puissance électrique correspondant à ladite trajectoire choisie.

14. Procédé selon l'une quelconque des revendications 7 à 13,
dans lequel ladite au moins une trajectoire de descente (40) comporte une première pente (46) selon ledit taux de descente estimé correspondant à un vol avec une puissance électrique fournie par ladite source (10) d'énergie électrique et une seconde pente (47) à un taux de descente d'autorotation jusqu'au sol correspondant à un vol sans puissance motrice.

15. Procédé selon l'une quelconque des revendications 7 à 14,
dans lequel ledit procédé comporte une étape de construction (172) de ladite trajectoire de descente (40) et/ou une étape de détermination (174) d'une vitesse de descente dudit aéronef (1) associée audit taux de descente estimée et à ladite puissance électrique correspondante, et/ou une étape de calcul (175) d'une durée de consommation associée à ladite puissance électrique correspondant audit taux de descente.

16. Procédé selon l'une quelconque des revendications 7 à 15,
dans lequel ladite caractéristique dudit aéronef (1) est choisie parmi une hauteur par rapport au sol, une vitesse d'avancement, une vitesse verticale dudit aéronef (1).

17. Procédé selon l'une quelconque des revendications 7 à 16,
dans lequel ledit taux de descente et ladite distance atteignable sont corrigés en fonction d'une vitesse du vent subi par ledit aéronef (1).

18. Source (10) d'énergie électrique apte à délivrer une puissance électrique de référence *(PRef)* pendant une durée de référence (*DTRef*) prédéterminée pour un niveau de charge de référence (NRef) prédéterminé comportant :
- au moins un dispositif de stockage (11,12) d'énergie électrique, et
- au moins un capteur (13-17),
**caractérisée en ce que** ladite source (10) d'énergie électrique comporte un calculateur (9) configuré pour mettre en oeuvre le procédé selon l'une quelconque des revendications 1 à 6.

19. Aéronef (1) comportant une installation motrice hybride (20) et un rotor de sustentation (2) entraîné en rotation par ladite installation motrice hybride (20) via une chaîne de transmission mécanique (5), ladite installation motrice hybride (20) comportant au moins un moteur thermique (21,22), au moins une machine électrique (23,24) et une source (10) d'énergie électrique reliée électriquement à ladite machine électrique (23,24) via une chaîne de liaison électrique (6), ladite source (10) d'énergie électrique comportant au moins un dispositif de stockage (11,12) d'énergie électrique et au moins un capteur (13-17), ladite source (10) d'énergie électrique étant apte à délivrer une puissance électrique de référence *(PRef)* pendant une durée de référence (*DTRef*) prédéterminée pour un niveau de charge de référence (NRef) prédéterminé,
**caractérisé en ce que** ladite source (10) d'énergie électrique comporte un calculateur (9) configuré pour mettre en oeuvre le procédé selon l'une quelconque des revendications 1 à 17.
